# FASCICULE DE BREVET EUROPEEN

(11) **EP 0 712 667 B1**
(45) Date de publication et mention de la délivrance du brevet: **09.02.2000**
(21) Numéro de dépôt: 95402605.0
(22) Date de dépôt: 20.11.1995
(51) Int. Cl.: B04B 9/08, F16D 1/116

(54) **Centrifugeuse à rotor démontable et à dispositif de blocage axial du rotor sur l'arbre d'entraînement**
Zentrifuge mit abnehmbarem Rotor und einer Einrichtung zur axialen Verriegelung des Rotors auf der Antriebswelle
Centrifuge with dismountable rotor and a device for the axial locking of the rotor on the drive shaft

(30) Priorité: 21.11.1994 FR 9413904
(43) Date de publication de la demande: 22.05.1996
(73) Titulaire: JOUAN, Société Anonyme dite, F-44600 Saint Nazaire (FR)
(72) Inventeur: Letourneur, Jean-Claude, F-44100 Nantes (FR)
(74) Mandataire: Bernasconi, Jean

(56) Documents cités:
- WO-A-83/04379
- DD-A- 36 013
- DE-A- 2 722 322
- GB-A- 1 588 373

## Description

La présente invention concerne une centrifugeuse du type comportant un arbre d'entraînement, un rotor monté démontable sur ledit arbre, ainsi qu'un dispositif pour assurer l'entraînement ainsi que le blocage axial du rotor sur l'arbre d'entraînement. Ce dispositif de blocage comprend un élément mâle sollicité élastiquement, susceptible de s'engager dans un élément femelle tel qu'un évidement de retenue.

On connaît une centrifugeuse de ce type dans laquelle le dispositif de blocage n'assure un blocage axial effectif du rotor sur l'arbre d'entraînement que lorsque le rotor tourne à grande vitesse. Ce dispositif est constitué d'une languette montée mobile dans une extrémité élargie de l'arbre d'entraînement, sollicitée par un ressort et susceptible de s'engager dans une gorge ménagée dans le rotor. Lors de la rotation à grande vitesse du rotor, la force centrifuge appliquée sur la languette maintient cette dernière collée contre la gorge, ce qui procure un blocage axial efficace du rotor.

Toutefois, la gorge est de faible profondeur et la languette présente un profil arrondi, de sorte que, à l'arrêt, on puisse démonter le rotor.

En conséquence, à des vitesses de rotation faibles, voire moyennes, du rotor, le blocage axial de ce dernier demeure donc aléatoire, ce qui engendre un risque non négligeable d'accident dû à un détachement fortuit du rotor en cours de fonctionnement de la centrifugeuse.

Il en résulte que cette réalisation connue ne garantit pas une sécurité de fonctionnement suffisante pour les centrifugeuses qui en sont équipées.

En outre, dans le dispositif de blocage de cette réalisation connue, en raison de la faible profondeur de la gorge de retenue, lorsque l'on monte le rotor sur l'arbre, l'engagement de la languette dans la gorge ne présente pas un caractère suffisamment franc pour engendrer un déclic suffisamment net et sonore pour informer l'opérateur que cet engagement a bien eu lieu dans des conditions satisfaisantes, de sorte qu'il subsiste le risque que l'opérateur déclenche la mise en rotation et la montée en vitesse du rotor, alors que la mise en position enclenchée du dispositif de blocage n'a pas eu lieu. Ceci augmente encore les risques d'accident par détachement fortuit du rotor.

Par ailleurs, la construction de cette centrifugeuse connue est compliquée puisqu'elle nécessite la réalisation, à l'extrémité de l'arbre d'entraînement, d'une partie élargie pour permettre le montage de la languette.

On connaît, par les documents DE-A-2 722 322 et WO-83/04379, des systèmes d'accouplement pour un blocage axial du rotor sur l'arbre et munis de moyens de blocage axial déverouillables depuis l'extérieur. DE-A-2 722 322 prévoit également un blocage en rotation du rotor sur l'arbre par engagement de rainures et nervures axiales. Ces dispositifs demandent, cependant, à l'opérateur, des manoeuvres précises, faute de quoi les blocages peuvent ne pas être assurés, avec toutes les conséquences qui peuvent en découler lors de la mise en rotation de la centrifugeuse.

L'invention a d'abord pour but de remédier à ces inconvénients.

Elle vise en outre à proposer une centrifugeuse à rotor démontable, qui soit équipée d'un dispositif capable d'assurer un blocage axial efficace et sûr du rotor même lorsque ce dernier tourne à faible vitesse.

Elle vise également à proposer un dispositif de blocage de rotor dont la mise en position enclenchée produise un signal sonore d'amplitude suffisante pour que l'opérateur soit informé du bon enclenchement du dispositif lors du montage du rotor sur l'arbre d'entraînement. Un contrôle visuel est également assuré du fait que l'extrémité de l'arbre d'entraînement est visible lorsque le rotor est verrouillé.

Ces buts sont atteints, conformément à l'invention, du fait que l'élément mâle du dispositif de blocage est monté sur le rotor et que sont prévus des moyens de déverrouillage actionnables depuis l'extérieur du rotor, permettant à l'opérateur de mettre ledit élément mâle en position dégagée de l'évidement de retenue et que l'extrémité libre de l'arbre d'entraînement présente des moyens de guidage coopérant avec des moyens complémentaires solidaires du rotor pour amener le rotor lors de l'engagement de l'arbre dans le rotor à pivoter autour de son axe depuis n'importe quelle position angulaire de départ et à descendre le long de l'arbre jusque dans une position dans laquelle ledit rotor est solidarisé en rotation avec l'arbre et ledit élément mâle est repoussé élastiquement dans l'élément femelle pour assurer un blocage axial du rotor.

Grâce a la présence de ces moyens de déverrouillage actionnables depuis l'extérieur, les éléments mâle et femelle peuvent être conçus avec un profil suffisamment profond et d'un tracé tel que l'engagement de l'un dans l'autre procure un blocage efficace même lorsque le rotor est à l'arrêt. Ceci peut, par exemple, être réalisé en donnant à l'élément mâle et à l'élément femelle un profil rectangulaire de sorte que, lorsque l'élément mâle est engagé dans l'élément femelle, on obtient un blocage axial solide du rotor par rapport à l'arbre d'entraînement, blocage que l'on ne peut supprimer en appliquant sur le rotor une force dirigée dans le sens du démontage de ce dernier à partir de l'arbre d'entraînement.

Il en résulte un accroissement de la sécurité de fonctionnement de la centrifugeuse.

Par ailleurs, l'élément mâle et l'élément femelle peuvent être réalisés avec un profil de profondeur suffisante pour qu'il se produise, au moment où le rotor atteint sa position de montage, un déclic suffisamment sonore pour informer l'opérateur que le verrouillage a bien été enclenché.

En outre, le dispositif de blocage selon l'invention étant monté sur le rotor, la construction de l'arbre d'entraînement est simplifiée.

On constitue avantageusement le dispositif de blocage conforme à l'invention, au moyen d'une pièce de verrouillage montée solidaire du rotor, mobile entre une position verrouillée et une position déverrouillée, sollicitée élastiquement vers sa position verrouillée, et formant à la fois un pêne pour coopérer avec un évidement de retenue de l'arbre d'entraînement et un organe de manoeuvre actionnable depuis l'extérieur du rotor, permettant, par une sollicitation mécanique sur ledit organe, de déplacer ladite pièce de verrouillage à l'encontre de sa sollicitation élastique pour amener le pêne dans sa position dégagée de l'évidement.

Selon un mode de réalisation actuellement préféré, le dispositif de blocage est construit de la manière suivante :

La pièce de verrouillage est conçue de manière à comporter, d'une part, une partie de base qui est guidée dans une glissière et qui forme le pêne et, d'autre part, une partie de prolongement formant l'organe de manoeuvre.

La glissière est ménagée dans un corps de verrou qui est logé et bloqué axialement dans un évidement axial du rotor.

Toujours selon ce mode de réalisation préféré, le corps de verrou sert en outre à réaliser l'accouplement en rotation du rotor avec l'arbre d'entraînement. A cet effet, le corps de verrou comprend une pièce de forme générale annulaire, dite bague d'entraînement, qui est munie d'un évidement profilé traversé, en position de montage du rotor, par une partie de l'arbre d'entraînement ayant une section droite de forme correspondante.

Grâce à cette réalisation, la construction du rotor est considérablement simplifiée puisque le dispositif de blocage n'est pas construit dans la matière-même du rotor mais qu'il est simplement rapporté sur le rotor, ce dernier ne devant comporter qu'un évidement axial conçu et dimensionné de manière à pouvoir recevoir, de préférence sans jeu, le corps de verrou muni de la pièce de verrouillage. Le blocage axial du corps de verrou peut être réalisé très simplement, par exemple au moyen d'un circlips.

Selon un mode de réalisation de l'invention, la glissière comprend une rainure ménagée dans la face supérieure de ladite bague d'entraînement. Le corps de verrou comporte de plus une pièce auxiliaire logée dans l'évidement du rotor, et appliquée sur ladite face munie d'une rainure de la bague d'entraînement, de manière à servir d'organe de maintien de la pièce de verrouillage dans ladite rainure et compléter ainsi la constitution de la glissière recevant la partie de base de la pièce de verrouillage.

Il est avantageux de concevoir la pièce de verrouillage et de l'agencer dans le corps de verrou de façon que son centre de masse soit, en position verrouillée de cette pièce, décalé par rapport à l'axe du rotor dans le sens de la sollicitation élastique de cette dernière.

De cette manière, la force centrifuge qui se développe dans la pièce de verrouillage lorsque le rotor tourne à grande vitesse, vient en renfort de la sollicitation élastique agissant en permanence sur cette pièce, et constitue le moyen essentiel du maintien du pêne dans l'évidement de retenue de l'arbre d'entraînement. On accroît ainsi encore plus la sécurité de fonctionnement de la centrifugeuse.

Avantageusement, la partie de base de la pièce de verrouillage présente une ouverture dont une partie du bord forme ledit pêne, cette ouverture étant, en position de montage du rotor, traversée par l'arbre d'entraînement.

Selon un mode de réalisation particulier de l'invention, le rotor comporte une poignée de préhension, et l'organe de manoeuvre, en position verrouillée de la pièce de verrouillage, est disposé à proximité de ladite poignée bien qu'il subsiste entre ces deux éléments un espace de débattement suffisant pour permettre à un opérateur saisissant d'une main ladite poignée, d'exercer au moyen de la même main une action sur ledit organe de manoeuvre permettant de déplacer la pièce de verrouillage jusque dans sa position déverrouillée.

Selon un autre mode de réalisation particulier, la poignée du rotor est remplacée par une paroi de guidage pour une clef de déverrouillage, et la pièce de verrouillage est agencée par rapport à ladite paroi de façon que l'organe de manoeuvre, en position verrouillée de la pièce de verrouillage, est positionné à proximité de ladite paroi de guidage bien qu'il subsiste entre ces deux éléments un espace de débattement suffisant pour permettre à ladite clef coulissant le long de ladite paroi de guidage d'exercer une action sur ledit organe de manoeuvre permettant de déplacer la pièce de verrouillage jusque dans sa position déverrouillée.

Il est avantageux de constituer ladite poignée, ou ladite paroi de guidage, par une prolongation vers le haut de ladite pièce auxiliaire servant à constituer avec la pièce d'accouplement, la glissière de montage de la pièce de verrouillage.

D'autres caractéristiques et avantages de l'invention ressortiront à la lecture de la description qui va suivre, description faite en référence aux dessins annexés dans lesquels :
- la figure 1 est une vue schématique en élévation et en coupe verticale montrant un rotor muni de son dispositif de blocage, et disposé en alignement et au-dessus de son arbre d'entraînement ;
- la figure 1a est une section droite de l'arbre d'entraînement, prise suivant le plan A-A de la figure 1, selon un mode de réalisation de l'invention ;
- la figure 2 est une vue en plan après rotation de 90° de la bague d'entraînement du dispositif de blocage de rotor représenté sur la figure 1 ;
- la figure 3 est une coupe verticale suivant le plan III-III de la figure 2 ;
- la figure 4 est une vue en plan de la pièce de verrouillage du dispositif de blocage de rotor représenté sur la figure 1 ;
- la figure 5 est une vue schématique partielle en élévation et en coupe verticale montrant le rotor de la figure 1 en position de montage sur son arbre d'entraînement, son dispositif de blocage étant en position verrouillée ;
- la figure 5a est une vue schématique partielle en coupe horizontale selon le plan V-V de la figure 5 ;
- la figure 6 est une vue analogue à la figure 5, montrant le dispositif de blocage du rotor en position déverrouillée ;
- la figure 6a est une vue schématique partielle en coupe horizontale selon le plan VI-VI de la figure 6 ;
- la figure 7 est une vue identique à la figure 6 et à plus petite échelle comportant en outre la silhouette d'une main saisissant la poignée du rotor et mettant simultanément le dispositif de blocage en position déverrouillée ;
- la figure 8 est une vue analogue aux figures 5 et 6, montrant un deuxième mode de réalisation du dispositif de blocage de rotor selon l'invention ;
- la figure 9 est une vue identique à la figure 8 et à plus petite échelle, montrant l'outil de déverrouillage en position active ;
- la figure 10 est une vue en élévation d'une réalisation de l'arbre d'entraînement selon l'invention faisant apparaître des moyens de guidage en rotation ;
- la figure 10a est une section droite de l'arbre d'entraînement, prise suivant le plan A-A de la figure 10 ;
- la figure 11 est une vue de côté en élévation de l'arbre d'entraînement représenté sur la figure 10 ;
- la figure 12 est une vue analogue à la figure 2, représentant un deuxième mode de réalisation de la bague d'entraînement de la centrifugeuse, correspondant au mode de réalisation de l'arbre d'entraînement représenté sur la figure 10;
- la figure 13 est une vue en élévation et en coupe verticale suivant le plan XIII-XIII de la figure 12 ; et
- la figure 14 est une vue en élévation et en coupe verticale suivant le plan XIV-XIV de la figure 12.

Sur les différentes figures, les éléments identiques ou analogues sont désignés par les mêmes références.

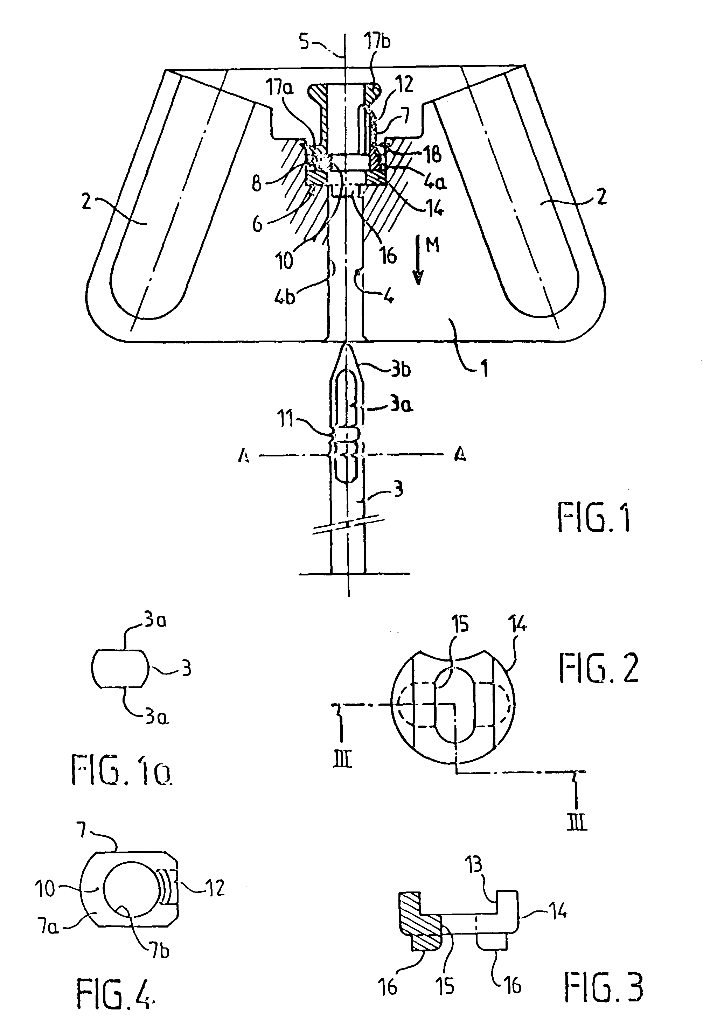

Selon l'exemple représenté sur la figure 1, la centrifugeuse comprend un rotor 1 comportant des logements 2 pour des ampoules ou autres récipients destinés à contenir des produits à centrifuger. Elle comprend également un arbre 3 pour l'entraînement en rotation du rotor 1. L'arbre 3 est de forme cylindrique à section circulaire. Il est muni, dans une zone voisinant son extrémité libre, de deux méplats symétriques 3a donnant à sa section droite à cet endroit une forme sensiblement rectangulaire (voir figure 1a). L'arbre 3 présente une extrémité libre conique se terminant en forme de pointe 3b. Les rôles des méplats 3a et de l'extrémité conique 3b seront expliqués plus loin.

Un perçage vertical en forme générale de contre-alésage 4 est ménagé dans le rotor 1 coaxialement à son axe 5. Ce perçage est destiné à recevoir l'arbre d'entraînement 3. La partie de plus forte section 4a du contre-alésage 4 est tournée vers le haut et elle reçoit un dispositif de blocage 6 qui est décrit en détail ci-après. La partie de plus faible section 4b du perçage 4 est destinée à recevoir l'arbre 3.

Le dispositif de blocage 6 comprend une pièce de verrouillage 7 montée solidaire du rotor 1, mobile entre une position verrouillée et une position déverrouillée. La pièce de verrouillage 7 est sollicitée élastiquement vers sa position verrouillée par un ressort de compression 8 prenant appui sur la paroi de la partie 4a du contre-alésage 4, et engagé dans un logement 9 de la pièce de verrouillage 7.

La pièce de verrouillage 7 forme à la fois un pêne 10 destiné à coopérer avec une gorge de retenue 11 de l'arbre d'entraînement 5, et un doigt de manoeuvre 12 pouvant être actionné depuis l'extérieur du rotor.

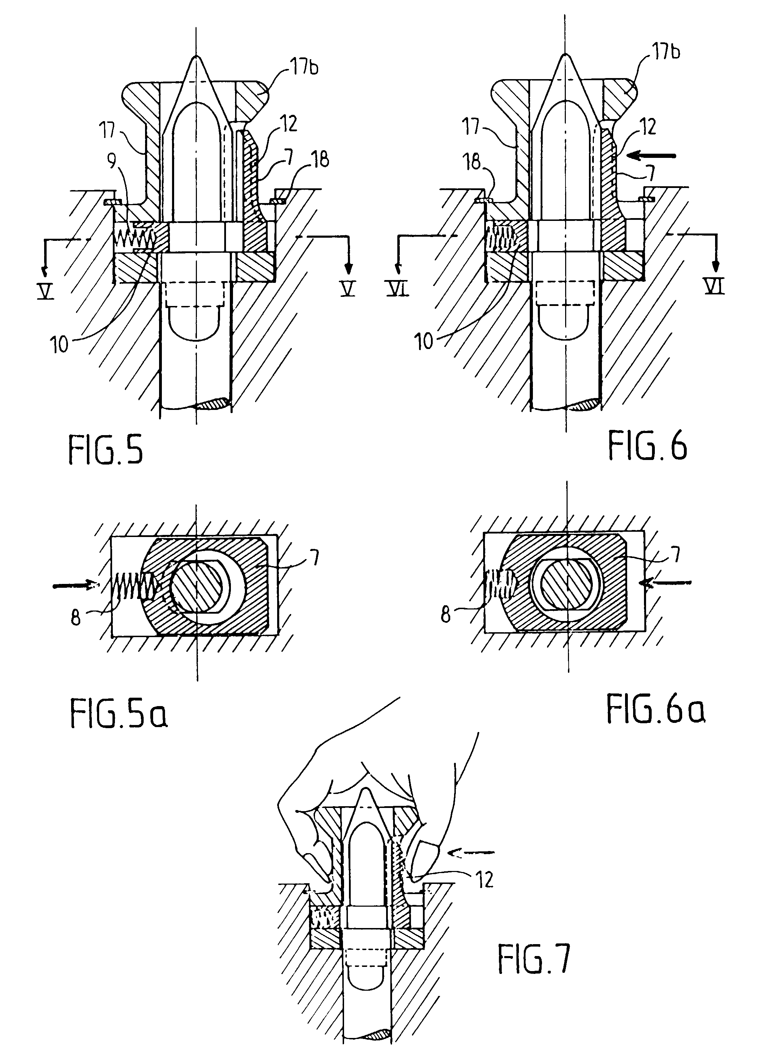

Le pêne 10 et l'évidement de retenue 11 présentent tous deux un profil de section rectangulaire ayant une profondeur suffisante pour que, lorsque le rotor 1 atteint sa position de montage telle que représentée sur les figures 5 et 6, l'introduction du pêne 10 dans l'évidement 11 provoque un déclic sonore suffisant pour informer l'opérateur du bon enclenchement de dispositif de verrouillage.

La pièce de verrouillage 7 comporte, d'une part, une partie de base 7a de forme sensiblement plane, d'épaisseur très légèrement inférieure à la hauteur de la gorge de retenue 11 de l'arbre 3, et munie d'une ouverture circulaire 7b et, d'autre part, une partie de prolongement s'étendant sensiblement perpendiculairement au plan de la partie de base 7a, formant le doigt de manoeuvre 12.

L'ouverture 7b de la partie de base 7a présente un diamètre sensiblement égal à celui de l'arbre 3. Le pêne 10 est constitué par une partie de bord de ladite ouverture 7b.

La partie de base 7a est guidée dans une glissière transversale à l'axe 5 du rotor 1. Cette glissière est constituée par une rainure à section rectangulaire 13 qui est ménagée dans la face supérieure d'une pièce de forme générale annulaire 14 logée dans la partie de plus grand diamètre 4a du perçage 4 du rotor.

Outre son rôle de corps de glissière, la pièce annulaire 14 sert à réaliser l'accouplement en rotation du rotor 1 avec l'arbre d'entraînement 3, et sera dénommée ci-après bague d'entraînement.

A cet effet d'une part, la bague 14 est agencée dans le rotor de manière à être solidaire en rotation avec ce dernier et d'autre part, elle est munie d'une ouverture centrale de section droite de forme générale rectangulaire 15 dimensionnée de manière à recevoir sensiblement sans jeu latéral une partie d'extrémité munie de méplats 3a de l'arbre 3. Pour obtenir la solidarisation en rotation de la bague 14 avec le rotor 1, cette dernière est munie de deux ergots 16 qui s'encastrent dans des logements (non représentés) ménagés dans la paroi du perçage 4 du rotor.

Une pièce auxiliaire en forme de tube ouvert aux deux extrémités 17 complète la constitution du dispositif de blocage du rotor 1. Cette pièce 17 est appliquée, par son extrémité inférieure 17a, sur la face munie de la rainure 13 de la bague d'entraînement 14. La pièce 17 joue donc de ce fait le rôle d'organe de maintien de la pièce de verrouillage 7 dans la rainure 13 ; elle complète donc la constitution de la glissière de montage de la pièce de verrouillage 7.

Un circlips 18 bloque axialement les éléments 14, 7 et 17a logés dans l'évidement 4a du rotor 1.

Il est avantageux de concevoir la pièce de verrouillage 7 et de l'agencer dans le corps de verrou 14, 17 de façon que son centre de masse soit, en position verrouillée de ladite pièce 7, décalé par rapport à l'axe 5 du rotor 1 dans le sens de la sollicitation élastique du ressort 8.

De cette manière, la force centrifuge qui se développe dans la pièce de verrouillage 7 lorsque le rotor 1 tourne à grande vitesse, vient assurer le maintien du pêne 10 dans la gorge de retenue 11 de l'arbre d'entraînement 3, la sollicitation élastique du ressort 8 agissant aussi en permanence sur cette pièce. On accroît ainsi encore plus la sécurité de fonctionnement de la centrifugeuse.

Selon le mode de réalisation des figures 1, 5 et 6, la pièce auxiliaire 17 constitue par son extrémité supérieure 17b une poignée de préhension du rotor 1. Comme on peut le voir sur les figures 1 et 5, le doigt de manoeuvre 12, en position verrouillée de la pièce de verrouillage 7, est disposé à proximité de ladite poignée 17b bien qu'il subsiste entre ces deux éléments un espace de débattement suffisant pour permettre à un opérateur saisissant d'une main ladite poignée 17b, d'exercer au moyen de la même main une action sur ledit doigt de manoeuvre 12 permettant de déplacer la pièce de verrouillage 7 jusque dans sa position déverrouillée (voir figure 7).

Le montage du rotor 1 sur l'arbre 3 est effectué en insérant ce dernier dans la partie de plus faible section 4b du perçage axial 4 du rotor 1. L'extrémité supérieure 3b de l'arbre 3 étant conique, celle-ci en atteignant le dispositif de blocage 6 va pousser la pièce de verrouillage 7 pour la mettre en position déverrouillée.

Lorsque la pièce 7 arrive en face de la gorge 11 de l'arbre 3, elle est déplacée vers la droite par le ressort 8, le pêne 10 venant se loger dans ladite gorge 11 assurant ainsi l'immobilisation axiale du rotor 1. L'engagement du pêne 10 dans la gorge 11 produit un déclic suffisamment sonore pour informer l'opérateur que le verrouillage axial du rotor 1 sur l'arbre 3 a bien été déclenché.

Par ailleurs, l'arbre 3 est conçu et dimensionné de telle sorte que, en position de montage du rotor 1, son extrémité en forme de pointe conique 3b dépasse de la pièce auxiliaire 17, ce dépassement fournissant à l'opérateur l'information que le verrouillage axial du rotor 1 est bien réalisé.

Pour enlever le rotor 1 il suffit, comme cela est montré sur la figure 7, de pousser sur le doigt 12 pour désengager le pêne 10 de la gorge 11, et de tirer vers le haut la poignée 17b pour sortir le rotor 1.

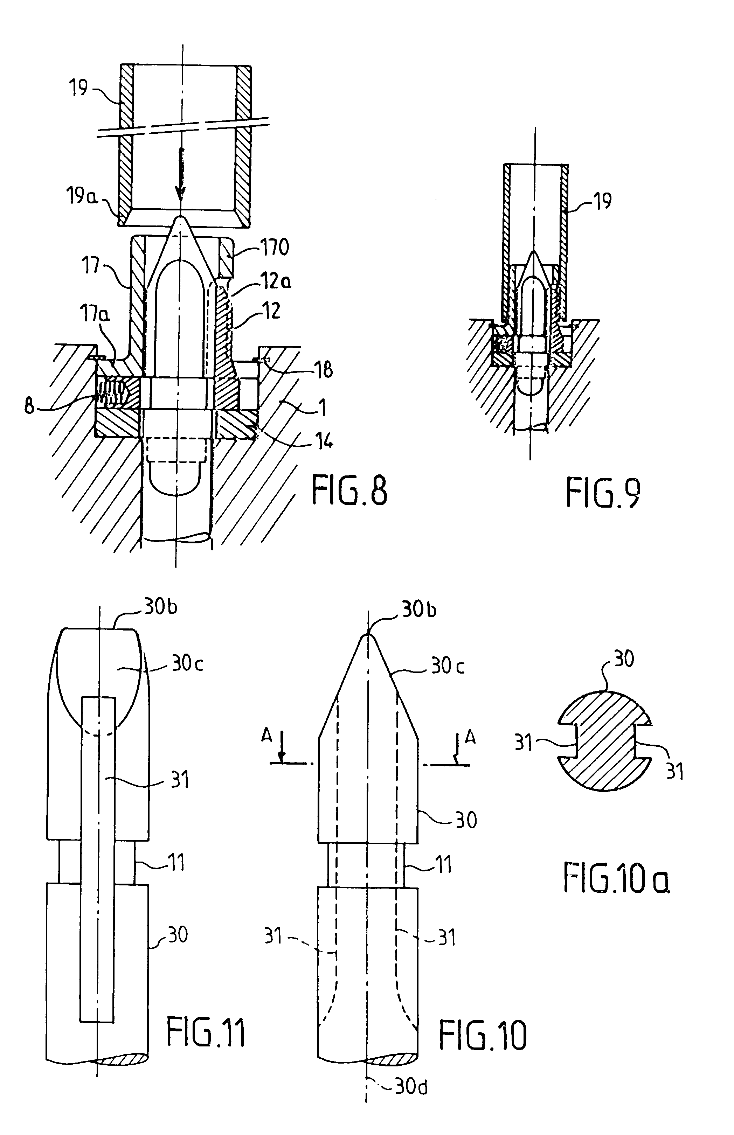

Le mode de réalisation des figures 8 et 9 diffère de celui des figures 1, 5 et 6 par le fait que la pièce auxiliaire 17 forme par son extrémité supérieure non pas une poignée, mais un tube de guidage 170 pour un outil tubulaire 19 servant à commander le déverrouillage du dispositif de blocage du rotor 1.

Ce mode de réalisation est appliqué notamment aux cas où le rotor est muni d'un couvercle étanche ne permettant pas la disposition d'une poignée sur la face supérieure du rotor.

Ici également, la pièce de verrouillage 7 est agencée par rapport au tube de guidage 170 de façon que le doigt de manoeuvre 12, en position verrouillée de la pièce de verrouillage 7, soit positionné à proximité dudit tube de guidage bien qu'il subsiste entre ces deux éléments un espace de débattement suffisant pour permettre audit outil tubulaire coulissant le long dudit tube de guidage d'exercer une action sur ledit doigt de manoeuvre permettant de déplacer la pièce de verrouillage jusque dans sa position déverrouillée comme cela est expliqué ci-après.

L'outil tubulaire 19 est dimensionné de manière à s'ajuster exactement sur le tube de guidage 170. En outre, on note que le doigt de manoeuvre 12 présente une extrémité libre 12a en forme de biseau. Par ailleurs, l'outil tubulaire 19 présente un bord de paroi biseauté 19a.

Ainsi, comme on peut le voir sur la figure 9, l'enfoncement de l'outil 19 sur le tube 170 provoque un déplacement vers la gauche de la pièce de verrouillage 7 jusqu'à sa mise en position déverrouillée.

L'outil 19 se maintenant de lui-même en position active de déverrouillage sur le tube de guidage 170, l'opérateur dispose de ses deux mains pour retirer le rotor 1 de l'arbre 3.

Si la centrifugeuse possède un dispositif de sécurité interdisant le démarrage de la rotation du rotor si le couvercle n'est pas fermé sur le rotor, il suffira de dimensionner la longueur axiale de l'outil 19 de telle sorte que l'on ne puisse pas fermer le couvercle lorsque cet outil est monté sur le tube 170, pour bénéficier d'une sécurité totale de fonctionnement.

On va maintenant décrire, en référence aux figures 10 à 14, un exemple des moyens de guidage pour la mise en place assurant un blocage automatique en toute circonstance. Selon ce mode de réalisation, ces éléments sont spécialement conçus de manière à assurer une fonction supplémentaire de guidage permettant que, lors de l'insertion de l'arbre 3 dans le perçage axial 4 du rotor 1, ce dernier ne puisse pas rester bloqué axialement et en équilibre sur l'extrémité supérieure de l'arbre 3, mais soit amené à pivoter automatiquement autour de son axe 5 et à descendre jusqu'à ce qu'il atteigne sa position de montage, et ce, quelle que soit la position angulaire de départ du rotor.

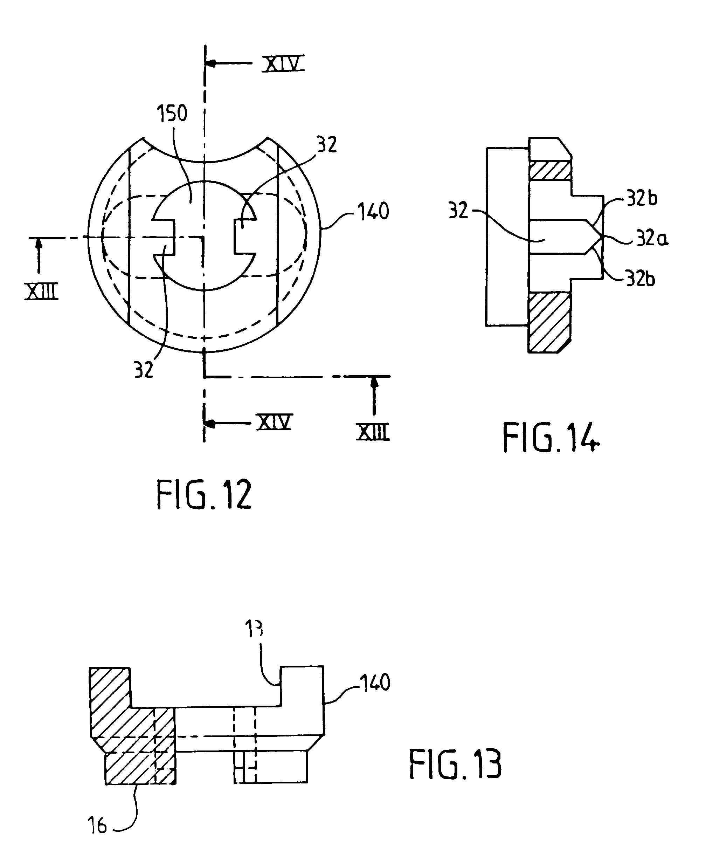

L'arbre 30 représenté sur les figures 10, 10a et 11 diffère de celui représenté sur les figures 1 et 5 à 7 en ce que, d'une part, son extrémité libre est délimitée par un double biseau formant une arête supérieure 30b et deux surfaces inclinées 30c symétriques l'une de l'autre par rapport à un plan axial 30d de l'arbre et, d'autre part, les méplats sont remplacés par deux rainures longitudinales 31 et diamétralement opposées symétriques l'une de l'autre par rapport au plan 30d. Les rainures 31 présentent une section droite rectangulaire et elles s'étendent chacune jusqu'à l'extrémité inférieure de la surface inclinée 30c adjacente.

La bague d'entraînement 140 représentée sur les figures 12 à 14 diffère de celle des figures 2 et 3 par la forme de son ouverture centrale 150 qui n'est plus rectangulaire mais de forme circulaire délimitée par deux nervures 32 diamétralement opposées l'une de l'autre, s'étendant parallèlement à l'axe de la bague 140, et faisant saillie sur la paroi intérieure de l'ouverture centrale 150 de ladite bague 140. Les nervures 32 sont de section rectangulaire, et elles sont disposées et dimensionnées de manière à pouvoir chacune s'ajuster sensiblement sans jeu transversal dans une rainure 31 correspondante de l'arbre 30.

La section droite de l'ouverture 150 munie des nervures 32 est dimensionnée de manière à pouvoir recevoir sensiblement sans jeu transversal la section droite de la partie de l'arbre 30 munie des rainures 31.

En position de montage du rotor 1, les nervures 32 sont logées dans les rainures 31 et forment ainsi clavettes de solidarisation en rotation du rotor 1 par rapport à l'arbre d'entraînement 30.

Comme on peut le voir plus particulièrement sur la figure 14, chaque nervure 32 présente une extrémité inférieure doublement biseautée formant une arête inférieure 32a et deux surfaces inclinées symétriques l'une de l'autre 32b.

Grâce à la configuration qui vient d'être décrite de l'arbre 30 et de la bague d'entraînement 140, le rotor 1 ne peut jamais rester en équilibre sur l'arbre 30 au moment où l'extrémité biseautée de ce dernier parvient au niveau de la bague 140.

En effet, lorsque le rotor 1 est descendu pour montage le long de l'arbre 30, les extrémités doublement biseautées 32a, 32b des nervures 32 coopérant avec l'extrémité doublement biseautée 30b, 30c de l'arbre 30, vont provoquer une rotation du rotor 1 autour de son axe 5 jusqu'à ce que les nervures 32 soient en alignement avec les rainures 31 de l'arbre 30 et commencent à s'engager dans lesdites rainures 31. Puis le rotor 1 continue de descendre jusqu'à atteindre sa position de montage pour laquelle le pêne 10 est engagé dans la gorge 11 de l'arbre 30.

Lorsque le rotor 1 est présenté pour montage sur l'arbre 30, il n'est pratiquement jamais positionné de telle sorte que les arêtes inférieures 32a des nervures 32 soient en alignement avec l'arête supérieure 30b de l'arbre 30. Mais, même lorsque cela serait le cas, cette position n'est pas une position stable et le glissement des surfaces inclinées 32b sur les surfaces inclinées 30c fera que le rotor 1 pivotera autour de son axe 5 tout en descendant le long de l'arbre 30, jusqu'à atteindre la position pour laquelle les nervures 32 sont en alignement avec les rainures 31 et commencent à s'engager dans lesdites rainures.

La bague d'entraînement 140 est avantageusement réalisée en une matière plus fragile que la matière constitutive de l'arbre 30, par exemple en matière plastique, de telle sorte que, en cas d'arrêt brutal de la rotation du rotor 1 ou en cas d'autres incidents mécaniques, les deux nervures formant clavettes 32 se cisaillent sans détériorer l'arbre moteur 30.

## Revendications

1. Centrifugeuse du type comportant un arbre d'entraînement (3 ; 30), un rotor (1) pouvant être monté de façon amovible sur l'arbre d'entraînement dans une position de montage pour laquelle il est accouplé en rotation avec ledit arbre, et un dispositif (6) pour assurer un blocage axial du rotor (1) par rapport à l'arbre d'entraînement (3 ; 30), ce dispositif comportant un élément mâle (10) monté sur le rotor, sollicité élastiquement et susceptible de coopérer avec un élément femelle, présenté par l'arbre d'entraînement et des moyens de déverrouillage (12, 12a ; 19) actionnables depuis l'extérieur du rotor permettant de mettre ledit élément mâle (10) en position dégagée de l'élément femelle (11), caractérisée en ce que l'extrémité libre de l'arbre d'entraînement présente des moyens de guidage (30b, 30c) coopérant avec des moyens complémentaires (32a, 32b) solidaires du rotor pour amener le rotor (1) lors de l'engagement de l'arbre (30) dans le rotor (1) à pivoter autour de son axe (5) depuis n'importe quelle position angulaire de départ et à descendre le long de l'arbre jusque dans une position dans laquelle ledit rotor est solidarisé en rotation avec l'arbre (30) et ledit élément mâle (10) est repoussé élastiquement dans l'élément femelle pour assurer un blocage axial du rotor.

2. Centrifugeuse selon la revendication 1, caractérisée en ce que lesdits éléments mâle et femelle (10, 11) présentent un profil sensiblement rectangulaire.

3. Centrifugeuse selon l'une des revendications 1 et 2, caractérisée en ce que lesdits moyens de déverrouillage comprennent une partie formant organe de manoeuvre (12, 12a) actionnable depuis l'extérieur du rotor (1), d'une pièce de verrouillage (7) montée solidaire du rotor, mobile entre une position verrouillée et une position déverrouillée, sollicitée élastiquement (8) vers sa position verrouillée, et formant également un pêne (10) pour coopérer avec un évidement de retenue (11) de l'arbre d'entraînement (3 ; 30).

4. Centrifugeuse selon la revendication 3, caractérisée en ce que ladite pièce de verrouillage (7) est conçue et agencée dans le rotor (1) de telle sorte que, en position verrouillée, son centre de masse soit décalé par rapport à l'axe (5) du rotor (1) dans le sens de sa sollicitation élastique.

5. Centrifugeuse selon l'une des revendications 3 et 4, caractérisée en ce que la pièce de verrouillage (7) est concue de manière à comporter, d'une part, une partie de base (7a) qui est guidée dans une glissière (13) ménagée dans un corps de verrou (14, 17a ; 140, 17a) et qui forme le pêne (10) et, d'autre part, une partie de prolongement formant l'organe de manoeuvre (12), et en ce que ledit corps de verrou (14, 17a ; 140, 17a) est logé et bloqué axialement (18) dans un évidement axial (4a) du rotor (1).

6. Centrifugeuse selon la revendication 5, caractérisée en ce que ledit corps de verrou comprend une pièce de forme annulaire (14 ; 140) dont l'ouverture centrale (15 ; 150) est, en position de montage du rotor (1), traversée par l'arbre d'entraînement (3 ; 30), et en ce que ladite pièce annulaire constitue un organe d'accouplement en rotation entre le rotor (1) et l'arbre d'entraînement (3 ; 30) et présente, sur l'une de ses faces, une rainure transversale à l'axe du rotor (13), formant ladite glissière recevant à coulissement ladite partie de base (7a) de la pièce de verrouillage (7).

7. Centrifugeuse selon l'une des revendications 3 à 6, caractérisée en ce que la pièce de verrouillage (7) présente une ouverture (7b) dont une partie du bord forme ledit pêne (10), cette ouverture étant, en position de montage du rotor, traversée par l'arbre d'entraînement (3).

8. Centrifugeuse selon l'une des revendications 3 à 7, caractérisée en ce que le rotor (1) comporte une poignée (17b) permettant sa préhension, et en ce que ladite pièce de verrouillage (7) est agencée par rapport à ladite poignée de façon que, en position verrouillée, ledit organe de manoeuvre (12) soit positionné à proximité de ladite poignée (17b) et que soit ménagé entre ces deux éléments (12, 17b) an espace de débattement suffisant pour permettre à un opérateur saisissant d'une main ladite poignée (17b), d'exercer au moyen de la même main une action sur ledit organe de manoeuvre (12) permettant de déplacer la pièce de verrouillage jusque dans sa position déverrouillée (figure 7).

9. Centrifugeuse selon l'une des revendications 3 à 7, caractérisée en ce que le rotor (1) comporte une paroi de guidage (170) pour une clef de déverrouillage (19), et en ce que ladite pièce de verrouillage (7) est agencée par rapport à ladite paroi (170) de façon que, en position verrouillée de la pièce de verrouillage (7), ledit organe de manoeuvre (12) soit positionné à proximité de ladite paroi de guidage (170) et que soit ménagé entre ces deux éléments (12, 170) un espace de débattement suffisant pour permettre à ladite clef (19) engagée dans ladite paroi de guidage (170) d'exercer une action sur ledit organe de manoeuvre (12) permettant de déplacer la pièce de verrouillage (7) jusque dans sa position déverrouillée.

10. Centrifugeuse selon l'une des revendications 8 et 9 et la revendication 6, prises en combinaison, caractérisée en ce que ledit corps de verrou comprend en outre une partie (17a) d'une pièce auxiliaire (17), cette partie étant appliquée sur ladite face munie de la rainure (13) de la pièce d'accouplement (14) pour constituer un organe de maintien de ladite pièce de verrouillage (7) dans ladite rainure (13) et compléter ainsi la constitution de la glissière, et en ce que ladite poignée (17b) ou ladite paroi de guidage (170) est formée par une extrémité de ladite pièce auxiliaire (17).

11. Centrifugeuse selon l'une des revendications 1 à 10, caractérisée en ce que ledit élément mâle (10) provoque, lors du blocage, un signal sonore.

12. Centrifugeuse selon la revendication 11, caractérisée en ce qu'au moins une nervure formant clavette (32) est prévue sur la paroi de l'ouverture centrale (150) de ladite pièce annulaire (140) pour, en position de montage du rotor (1), coopérer avec une rainure longitudinale (31) de l'arbre d'entraînement (30) et en ce que l'extrémité inférieure de ladite nervure (32) et l'extrémité supérieure de l'arbre (30) sont effilées et forment une arête extrême (30b, 32a, respectivement) et deux surfaces inclinées (30c, 32b, respectivement), ces extrémités effilées étant destinées à coopérer l'une avec l'autre pour amener le rotor (1) lors de l'engagement de l'arbre (30) dans ledit deuxième évidement axial (4b) à pivoter autour de son axe (5) depuis n'importe quelle position angulaire de départ jusque dans une position pour laquelle le rotor est solidarisé en rotation avec l'arbre (30).

## Patentansprüche

1. Zentrifuge der Art, die eine Antriebswelle (3; 30), einen Rotor (1), der auf der Antriebswelle in abnehmbarer Weise in einer Befestigungsposition befestigt werden kann, in der er mit der Antriebswelle in Drehung verbunden ist, und eine Einrichtung (6) umfaßt, um eine axiale Verriegelung des Rotors (1) auf der Antriebswelle (3; 30) sicherzustellen, wobei diese Einrichtung ein auf dem Rotor befestigtes männliches Element (10), das elastisch beansprucht wird und mit einem weiblichen Element zusammenwirkt, dargestellt durch die Antriebswelle, und Entriegelungsmittel (12, 12a; 19) umfaßt, die von der Außenseite des Rotors her bedienbar sind, wodurch es möglich wird, das männliche Element (10) in eine freie Position vom weiblichen Element (11) zu bringen, dadurch gekennzeichnet, daß das freie Ende der Antriebswelle Führungsmittel (30b, 30c) aufweist, die mit den ergänzenden Mitteln (32a, 32b), welche mit dem Rotor einstückig sind, zusammenwirken, um den Rotor (1) zum Zeitpunkt des Eingreifens der Antriebswelle (30) in den Rotor (1) dazu zu bringen, sich um seine Achse (5) aus einer beliebigen Ausgangswinkelposition zu drehen und entlang der Antriebswelle nach unten zu verlaufen, bis zu einer Position, in welcher sich der Rotor in Drehung mit der Antriebswelle (3C) zusammenschließt, und das männliche Element (10) elastisch in das weibliche Element gedrückt wird, um eine axiale Verriegelung des Rotors zu gewährleisten.

2. Zentrifuge nach Anspruch 1, dadurch gekennzeichnet, daß das männliche und das weibliche Element (10, 11) ein im wesentlichen rechtwinkeliges Profil aufweisen.

3. Zentrifuge nach einem der Ansprüche 1 und 2, dadurch gekennzeichnet, daß die Entriegelungsmittel einen Abschnitt umfassen, der ein Betätigungsorgan (12, 12a) bildet, das von der Außenseite des Rotors (1) her über ein Verriegelungsstück (7) bedienbar ist, das einstückig mit dem Rotor befestigt ist, beweglich zwischen einer verriegelten und einer entriegelten Position, elastisch beansprucht (8) zur verriegelten Position hin, und des weiteren einen Riegel (10) bildet, um mit einer Rückhalteaussparung (11) der Antriebswelle (3; 30) zusammenzuwirken.

4. Zentrifuge nach Anspruch 3, dadurch gekennzeichnet, daß das Verriegelungsstück (7) im Rotor (1) so konzipiert und angeordnet ist, daß sein Massenmittelpunkt in verriegelter Position gegenüber der Achse (5) des Rotors (1) in die Richtung der elastischen Beanspruchung versetzt wird.

5. Zentrifuge nach einem der Ansprüche 3 und 4, dadurch gekennzeichnet, daß das Verriegelungsstück (7) so konzipiert ist, daß es einerseits einen Basisabschnitt (7a) umfaßt, der in einer Führungsschiene (13) geführt wird, die in einem Verschlußkörper (14, 17a; 140, 17a) angeordnet ist, und der den Riegel (10) bildet, und andererseits einen Verlängerungsabschnitt, der das Betätigungsorgan (12) bildet, und dadurch gekennzeichnet, daß der Verschlußkörper (14, 17a; 140, 17a) axial (18) in einer axialen Aussparung (4a) des Rotors (1) angeordnet und blockiert ist.

6. Zentrifuge nach Anspruch 5, dadurch gekennzeichnet, daß der Verschlußkörper ein ringförmiges Stück (14; 140) umfaßt, dessen Mittelöffnung (15; 150) in der Befestigungsposition des Rotors (1) von der Antriebswelle (3; 30) durchdrungen wird, und dadurch, daß das ringförmige Stück ein Verbindungsorgan in Drehung zwischen dem Rotor (1) und der Antriebswelle (3; 30) darstellt und auf einer seiner Flächen eine Nut aufweist, die quer zur Rotorachse (13) verläuft, wodurch die Führungsschiene gebildet wird, welche gleitend den Basisabschnitt (7a) des Verriegelungsstücks (7) aufnimmt.

7. Zentrifuge nach einem der Ansprüche 3 bis 6, dadurch gekennzeichnet, daß das Verriegelungsstück (7) eine Öffnung (7b) aufweist, bei der ein Randabschnitt den Riegel (10) bildet, wobei diese Öffnung in der Befestigungsposition des Rotors von der Antriebswelle (3) durchdrungen wird.

8. Zentrifuge nach einem der Ansprüche 3 bis 7, dadurch gekennzeichnet, daß der Rotor (1) einen Griff (17b) umfaßt, mit dessen Hilfe er erfaßt werden kann, und dadurch, daß das Verriegelungsstück (7) zum Griff so angeordnet ist, daß in der verriegelten Position das Betätigungsorgan (12) in der Nähe des Griffs (17b) angeordnet ist, und daß zwischen den beiden Elementen (12, 17b) ein Bewegungsraum vorhanden ist, der ausreicht, um einem Bediener, der mit einer Hand den Griff (17b) faßt, zu ermöglichen, mit Hilfe dieser Hand das 3etätigungsorgan (12) so zu betätigen, daß das Verriegelungsstück bis in seine entriegelte Position (Figur 7) verschoben wird.

9. Zentrifuge nach einem der Ansprüche 3 bis 7, dadurch gekennzeichnet, daß der Rotor (1) eine Führungswand (170) für einen Entriegelungsschlüssel (19) umfaßt, und dadurch, daß das Verriegelungsstück (7) zur Wand (170) so angeordnet ist, daß das Betätigungsorgan (12) in verriegelter Position des Verriegelungsstücks (7) in der Nähe der Führungswand (170) positioniert ist, und daß zwischen den beiden Elementen (12, 170) ein Bewegungsraum vorhanden ist, der ausreicht, um zu ermöglichen, daß der Schlüssel (19), der in die Führungswand (170) eingreift, auf das Betätigungsorgan (12) wirkt, wodurch es möglich wird, das Verriegelungsstück (7) bis zu seiner Entriegelungsposition zu verschieben.

10. Zentrifuge nach einem der Ansprüche 8 und 9 und Anspruch 6, in Verbindung genommen, dadurch gekennzeichnet, daß der Verschlußkörper unter anderem einen Abschnitt (17a) eines Hilfsstücks (17) umfaßt, wobei dieser Abschnitt auf der Oberfläche angebracht ist, welche die Nut (13) des Verbindungsstücks (14) aufweist, um ein Halteorgan des Verriegelungsstücks (7) in der Nut (13) zu bilden und so die Bildung der Führungsschiene zu vervollständigen, und dadurch, daß der Griff (17b) oder die Führungswand (170) durch ein Ende des Hilfsstücks (17) gebildet wird.

11. Zentrifuge nach einem der Ansprüche 1 bis 10, dadurch gekennzeichnet, daß das männliche Element (10) zum Zeitpunkt der Blockierung ein akustisches Signal auslöst.

12. Zentrifuge nach Anspruch 11, dadurch gekennzeichnet, daß zumindest eine Rippe, die einen Nutkeil (32) bildet, auf der Wand der Mittelöffnung (150) des ringförmigen Stücks (140) vorgesehen ist, um in der Befestigungsposition des Rotors (1) mit einer Längsnut (31) der Antriebswelle (30) zusammenzuwirken und dadurch, daß das untere Ende der Rippe (32) und das obere Ende der Antriebswelle (30) sich verjüngen und eine äußerste Kante (30b beziehungsweise 32a) und zwei geneigte Oberflächen (30c beziehungsweise 32b) bilden, wobei die verjüngten Enden dazu bestimmt sind, miteinander zusammenzuwirken, um den Rotor (1) zum Zeitpunkt des Eingreifens der Antriebswelle (30) in die zweite axiale Aussparung (4b) dazu zu bringen, sich aus einer beliebigen Ausgancswinkelposition um seine eigene Achse (5) zu drehen, bis hin zu einer Position, in welcher sich der Rotor in Drehung mit der Antriebswelle (30) zusammenschließt.

## Claims

1. Centrifuge of the type comprising a drive shaft (3 ; 30), a rotor (1), which can be removably mounted on the drive shaft in a mounting position in which it is coupled for rotation with the shaft, and a device (6) for locking the rotor (1) axially relative to the drive shaft (3 ; 30), which device comprises a male element (10) which is mounted on the rotor and which is resiliently urged and capable of cooperating with a female element, belonging to the drive shaft, and unlocking means (12, 12a ; 19) which can be operated from outside the rotor and which enable the male element (10) to be placed in a position disengaged from the female element (11), characterised in that the free end of the drive shaft has guide means (30b, 30c) cooperating with complementary means (32a, 32b) which are unitary with the rotor in order to cause the rotor (1), during the engagement of the shaft (30) in the rotor (1), to pivot about its axis (5) from any angular starting position and to descend along the shaft until it reaches a position in which the rotor is fixed for rotation with the shaft (30) and the male element (10) is pushed back resiliently into the female element in order to lock the rotor axially.

2. Centrifuge according to claim 1, characterised in that the male and female elements (10, 11) have a substantially rectangular shape.

3. Centrifuge according to either claim 1 or claim 2, characterised in that the unlocking means comprise a portion forming a member (12, 12a), operable from outside the rotor (1), for manoeuvring a lockinq member (7) which is mounted in a unitary manner with the rotor, is movable between a locked position and an unlocked position and is resiliently urged (8) towards its locked position, and also forming a latch (10) for cooperating with a retaining recess (11) of the drive shaft (3 ; 30).

4. Centrifuge according to claim 3, characterised in that the locking member (7) is designed and arranged in the rotor (1) in such a manner that, in the locked position, its centre of mass is offset relative to the axis (5) of the rotor (1) in the direction of its resilient urging.

5. Centrifuge according to either claim 3 or claim 4, characterised in that the locking member (7) is designed in such a manner as to comprise, on the one hand, a base portion (7a) which is guided in a slide (13) formed in a lock body (14, 17a ; 140, 17a) and which forms the latch (10) and, on the other hand, an extension portion forming the manoeuvring member (12), and in that the lock body (14, 17a ; 140, 17a) is accommodated and locked axially (18) in an axial recess (4a) of the rotor (1).

6. Centrifuge according to claim 5, characterised in that the lock body comprises an annular member (14 ; 140), the central opening (15 ; 150) of which is traversed by the drive shaft (3 ; 30) when the rotor (1) is in the mounted position, and in that the annular member constitutes a means for coupling the rotor (1) and the drive shaft (3 ; 30) in rotation and has, on one of its faces, a groove (13) which is transverse to the axis of the rotor and which forms the slide receiving in a slidable manner the base portion (7a) of the blocking member (7).

7. Centrifuge according to any one of claims 3 to 6, characterized in that the locking member (7) has an opening (7b), one portion of the edge of which forms the latch (10), the opening being traversed by the drive shaft (3) when the rotor is in the mounted position.

8. Centrifuge according to any one of claims 3 to 7, characterised in that the rotor (1) comprises a handle (17b) enabling it to be gripped, and in that the locking member (7) is arranged relative to the handle in such a manner that, in the locked position, the manoeuvring member (12) is positioned close to the handle (17b) and that a clearance space is formed between those two elements (12, 17b) which is sufficient to enable an operator grasping the handle (17b) by one hand to exert bY means of that same hand an action on the manoeuvring member (12) enabling the locking member to be displaced until it reaches its unlocked position (Figure 7).

9. Centrifuge according to any one of claims 3 to 7, characterised in that the rotor (1) comprises a guide wall (170) for an unlocking key (19), and in that the locking member (7) is arranged relative to the wall (170) in such a manner that, when the locking member (7) is in the locked position, the manoeuvring member (12) is positioned close to the guide wall (170) and that a clearance space is formed between those two elements (12, 170) which is sufficient to enable the key (19) engaged in the guide wall (170) to exert an action on the manoeuvring member (12) enabling the locking member (7) to be displaced until it reaches its unlocked position.

10. Centrifuge according to either claim 8 or claim 9 and claim 6, taken in combination, characterised in that the lock body also comprises a portion (17a) of an auxiliary member (17), which portion is applied to that face of the coupling member (14) which is provided with the groove (13), in order to constitute a means for holding the locking member (7) in the groove (13) and in order thus to complete the constitution of the slide, and in that the handle (17b) or the guide wall (170) is formed by one end of the auxiliary member (17).

11. Centrifuge according to any one of claims 1 to 10, characterised in that the male element (10) produces a sound signal during locking.

12. Centrifuge according to claim 11, characterised in that at least one rib forming a spline (32) is provided on the wall of the central opening (150) of the annular member (140) in order to cooperate with a longitudinal groove (31) in the drive shaft (30) when the rotor (1) is in the mounted position, and in that the lower end of the rib (32) and the upper end of the shaft (30) are tapered and form an end edge (30b, 32a, respectively) and two inclined surfaces (30c, 32b, respectively), those tapered ends being intended to cooperate with one another in order to cause the rotor (1), during the engagement of the shaft (30) in the second axial recess (4b), to pivot about its axis (5) from any angular starting position until it reaches a position in which the rotor is fixed for rotation with the shaft (30).
